# EUROPEAN PATENT SPECIFICATION

(11) **EP 1 585 396 B1**
(45) Date of publication and mention of the grant of the patent: **14.11.2007**
(21) Application number: 04704290.8
(22) Date of filing: 22.01.2004
(51) Int. Cl.: A24C 5/34, G01N 15/08

(54) **IMPROVED MEASURING DEVICE**
VERBESSERTE MESSVORRICHTUNG
AMELIORATION APPORTEE A UN DISPOSITIF DE MESURE

(30) Priority: 24.01.2003 GB 0301723
(43) Date of publication of application: 19.10.2005
(73) Proprietor: MOLINS PLC, Blakelands, Milton Keynes MK14 5LU (GB)
(72) Inventor: WILSON, Ronald, Frederick, Buckingham, Bucks MK18 1YR (GB); CARPENTER, Peter, Princeton, NJ 08540 (US)
(74) Representative: Williams, Michael Ian
(86) International application number: PCT/GB2004/000252
(87) International publication number: WO 2004/064547

(56) References cited:
- DE-A- 3 110 550
- DE-A- 4 025 165
- GB-A- 2 261 151
- US-A- 3 386 281
- US-A- 5 471 866
- US-A- 5 490 526
- US-B1- 6 397 663

## Description

The present invention relates to improvements in and relating to pressure drop and/or ventilation measuring devices for rolled smoking articles and the like (see e.g. US-A-3 386 281). The invention is especially concerned with the provision of an improved sleeve for use in such a measuring device for gripping a rolled smoking article or the like during the measurement of pressure drop and/or ventilation.

The quality and performance of a rolled smoking article such as a cigarette, cigar or cigarillo, may be affected by many factors; including the density of packing and the moisture content of the tobacco, and the physical dimensions of the article. Likewise, the quality and performance of filters for rolled smoking articles will depend on a variety of factors, such as the uniformity and density of the packed filter material.

Among the parameters typically measured for the purpose of assessing the quality of a cigarette or filter is the pressure drop along the length of the cigarette or filter. The pressure drop of a cigarette is directly related to the draw resistance experienced by the smoker, with a higher pressure drop requiring the smoker to work harder in order to draw smoke from the cigarette. Ventilation, another parameter used for assessing cigarette quality, is a measure of the airflow into the cigarette through pores provided in the cigarette and tipping papers. Increased ventilation results in dilution of the cigarette smoke with air. As with changes in pressure drop, this will have a direct effect on the smoker's perception and enjoyment of the product.

Devices for measuring pressure drop and/or ventilation are known in the art. Such devices typically comprise a container defining a bore having one open end, which bore is shaped to accommodate a rolled smoking article or filter rod, and means for applying a vacuum to the bore so as to draw air into the bore and through an article or filter rod accommodated within the bore. Means are provided for measuring the resultant flowrate of air through the article or filter rod and/or the pressure drop along the length of the article or filter rod, whereby a measurement of ventilation or pressure drop may be achieved.

Clearly, it is important that the rolled smoking article or filter rod should be firmly held within the bore by airtight means, whereby the flow of air along the bore juxtaposed (but not through) the article or rod will be prevented. However, it is desirable to ensure that the article or rod is not physically damaged or deformed in any way, as this may alter the pressure drop or ventilation of the product, resulting in a misleading measurement. Typically, therefore, the bore of the measuring device is fitted with one or more latex sleeves which serve to grip the article or rod in an airtight fashion during the measuring process without substantially deforming the article or rod. The latex sleeves commonly in use in the art for this purpose comprise a tube of latex material, which is usually manufactured by dipping.

It has however been found that such latex sleeves tend to suffer from fatigue and failure and, as a result, require frequent replacement. This is both inconvenient and costly in terms of equipment "down-time".

It is an object of the present invention therefore to provide an improved sleeve of the kind suitable for elastically holding a rolled smoking article or filter rod in a substantially airtight fashion within the bore of a pressure drop/ventilation measuring device, which improved sleeve does not suffer to the same extent from the aforementioned defects.

According to one aspect of the present invention therefore, there is provided a sleeve comprising a hollow elongate body having two ends, which sleeve is suitable for elastically gripping a rolled smoking article or a filter rod for rolled smoking articles in an airtight or substantially airtight fashion; characterised in that said sleeve is formed by moulding whereby each of said ends is moulded with an annular portion which can be folded circumferentially outwardly without imposing substantial strain on the material of the sleeve.

The present inventors have observed that the fatigue and failure of the prior art latex sleeves is initiated principally at and around each end of the sleeve. When the sleeve is fitted to the bore of a measuring device, each end of the tubular sleeve is folded circumferentially outwardly over a corresponding circumferential flange provided in or around the bore, whereby the sleeve is held firmly in position within the bore. The act of turning each end of the sleeve over a flange results in substantial deformation of the tubular configuration of the sleeve, which gives rise to a high degree of localised strain, leading to the generation of an early failure point.

In contrast, the sleeve of the present invention, being moulded to enable each end of the sleeve to be folded circumferentially outwardly without imposing substantial strain on the material of the sleeve, may be fitted to the bore of a measuring device in the aforementioned manner without giving rise to early failure points at either end of the sleeve. Thus, the product life of a sleeve in accordance with the invention may be significantly longer than that of a prior art latex sleeve.

Suitably, said annular portion of each end of the body may comprise a cup or lip portion having an internal diameter larger than the internal diameter of the elongate body, and an annular shoulder portion which joins said cup or lip portion to the elongate body. In such embodiments, therefore, the step of circumferentially folding the annular portion will involve folding the shoulder portion such that the cup portion or lip portion is turned inside out or inverted. To facilitate this, the sleeve may be moulded such that the thickness of the sleeve material forming said cup or lip portion is greater than the thickness of the sleeve material forming said shoulder portion. This will also serve to improve the resilience of said cup or lip portion.

Conveniently, the thickness of the sleeve material forming said annular shoulder portion may be the same as the thickness of the sleeve material forming said elongate body. Said thickness may be in the range about 0.2-0.5mm. Said annular shoulder portion may have a substantially frustoconical or curved frustoconical configuration, which tapers in internal diameter from the internal diameter of the cup or lip portion to the internal diameter of the elongate body. Suitably, the axial length of the shoulder portion may be no more than about 4mm, preferably no more than about 3mm, more preferably no more than about 2mm. Suitably, the axial length of the shoulder portion may be at least 1mm.

Where said annular portion of each end of the body comprises a cup portion, said cup portion may have a substantially cylindrical configuration. Optionally, said cup portion may comprise a circumferential lip remote from said shoulder portion, which circumferential lip protrudes radially outwardly from the outer surface of said cup portion. Said circumferential lip may be adapted such that when said annular portion of the sleeve is folded circumferentially outwardly for gripping a flange provided in or around a bore, said circumferential lip can engage with a corresponding annular rebate provided in said flange.

Where said annular portion of each end of the body comprises a lip portion, said lip portion may comprise a circumferential lip which protrudes radially outwardly from the sleeve and is positioned such that when said annular portion of the sleeve is folded circumferentially outwardly for gripping a flange provided in or around a bore, said circumferential lip can engage with a corresponding annular rebate provided in said flange. This will improve the grip of the sleeve on the bore.

Suitably, the internal diameter of said elongate body may be slightly smaller than the diameter of a rolled smoking article or filter rod, such as to enable the elongate body to elastically grip the rolled smoking article or filter rod in an airtight fashion. Thus, where the sleeve is to be used for gripping a cigarette or filter rod for cigarettes, the internal diameter of the sleeve may be about 5-7mm, such as about 6mm, depending upon the diameter of the cigarette or filter rod.

Said sleeve may be used for elastically gripping a rolled smoking article or a filter rod either for the purposes of a pressure drop test, or for the purposes of a ventilation test, or for the purposes of both a pressure drop test and a ventilation test. Where said sleeve is to be used for the purposes of a pressure drop test only, the length of said sleeve may preferably be greater than the length of said rolled smoking article or said filter rod, in order to enable said sleeve to grip the article or rod effectively along the whole of the length thereof. Thus, said sleeve may have a length in the range about 25-300mm, preferably in the range about 50-250mm, most preferably in the range about 150-200mm. Suitably, said sleeve may be sufficiently long to grip the longest standardised smoking article or filter rod. Said sleeve may preferably be moulded with an annular cup portion at each end thereof, which cup portion may have an axial length in the range about 3-15mm; preferably less than about 10mm; more preferably in the range about 5-10mm.

Conversely, where said sleeve is to be used for the purposes of a ventilation test, the length of said sleeve may preferably be selected such as to enable selected lengths of the rolled smoking article or filter rod to be covered for the purposes of the ventilation test, whilst permitting effective gripping of said article or rod. Thus, said sleeve may have a length in the range about 3-50mm, more preferably in the range about 5-30mm, even more preferably in the range about 10-20mm. Said sleeve may preferably be moulded with an annular lip portion at each end thereof.

Advantageously, said sleeve may be formed by injection moulding. Thus, the sleeve may be formed from any elastic material which is capable of being injection moulded. In some embodiments, said sleeve may comprise a silicone material, such as a silicone rubber. In preferred embodiments, said sleeve may comprise a cured silicone rubber. As is well known to the man skilled in the art, various additives may be incorporated into silicone rubber in order to modulate its characteristics, particularly its mechanical properties, according to particular requirements. A suitable mouldable material for formation of the sleeve is available from Dow Corning STI, and is sold by the Harboro Rubber Co Ltd, St Mary's Road, Market Harborough, Leics LE16 7EE, UK under the reference KP-109. Said material may be cured and moulded into the desired shape in accordance with methods well known in the art.

There may be provided a head assembly for a pressure drop and/or ventilation measuring device, which head assembly defines an elongate bore that is adapted for accommodating a rolled smoking article or a filter rod for rolled smoking articles, wherein one end of the bore is open and the other end of the bore is adapted to communicate with vacuum means whereby air may be drawn into said bore and through an article or rod accommodated within the bore and/or with a source of pressurised gas whereby pressurised gas may be propelled into said bore and through an article or rod accommodated within the bore, and wherein the head assembly comprises a sleeve in accordance with the invention; said bore may comprise at least one pair of spaced circumferential flanges positioned within or around said bore, which flanges respectively engage the opposing annular portions of a sleeve such that said sleeve is fitted to the interior of said bore and is positioned for elastically gripping a rolled smoking article or filter rod therein.

Said annular portions of the sleeve may accordingly be moulded so as to enable an optimum fit between said annular portions of the sleeve and said flanges. Where said flanges have configurations differing from one another, said annular portions of the sleeve may also be moulded with configurations differing one from the other.

Optionally, one or both of said circumferential flanges may comprise an annular rebate provided on the outer surface thereof, which annular rebate is adapted to engage a circumferential lip provided on said sleeve.

In some embodiments, said sleeve may be arranged to extend along the full length of said bore, such as to grip said rolled smoking article or filter rod along the entire length thereof. In this case, the head assembly will be suitable for use in a device capable of measuring pressure drop only, but not ventilation. Said circumferential flanges may accordingly be respectively provided at each of the opposing ends of the bore. Conveniently, each of said circumferential flanges may define a respective end of the bore.

In other embodiments, said or each pair of flanges may be positioned within said bore such that a rolled smoking article or filter rod accommodated within said bore is gripped along a part of the length thereof. Conveniently, each pair of flanges may be defined by an annular protrusion or bobbin provided on the walls of said bore, which annular protrusion or bobbin has a substantially T-shaped cross-section. The axial length of said annular protrusion or bobbin, and hence of the sleeve engaging said annular protrusion or bobbin, may be in the range about 5-30mm, such as about 10-20mm.

According to another aspect of the present invention, there is provided a method for measuring the pressure drop or ventilation of a rolled smoking article or a filter rod, comprising the steps of providing a pressure drop and/or ventilation measuring device having a head assembly,
placing said article or rod within the bore of said head assembly such that the article or rod is gripped by said or each sleeve, connecting said other end of the bore to vacuum means or to a source of pressurised gas and operating said vacuum means or said source of pressurised gas to respectively draw air or propel gas into said bore and through said article or rod, and measuring the resultant airflow or pressure difference along said article or rod.

Following is a description, by way of example only, and with reference to the accompanying drawings, of embodiments of the present invention.
Figure 1a shows an isometric view of a first sleeve in accordance with the invention;
Figure 1b shows an isometric view of a second sleeve in accordance with the invention;
Figure 2a shows a cross-sectional side view of the sleeve of Figure 1a;
Figure 2b shows an enlarged view of a part of Figure 2a;
Figures 3a and 3b illustrate the assembly of the sleeve of Figure 1a with a bobbin;

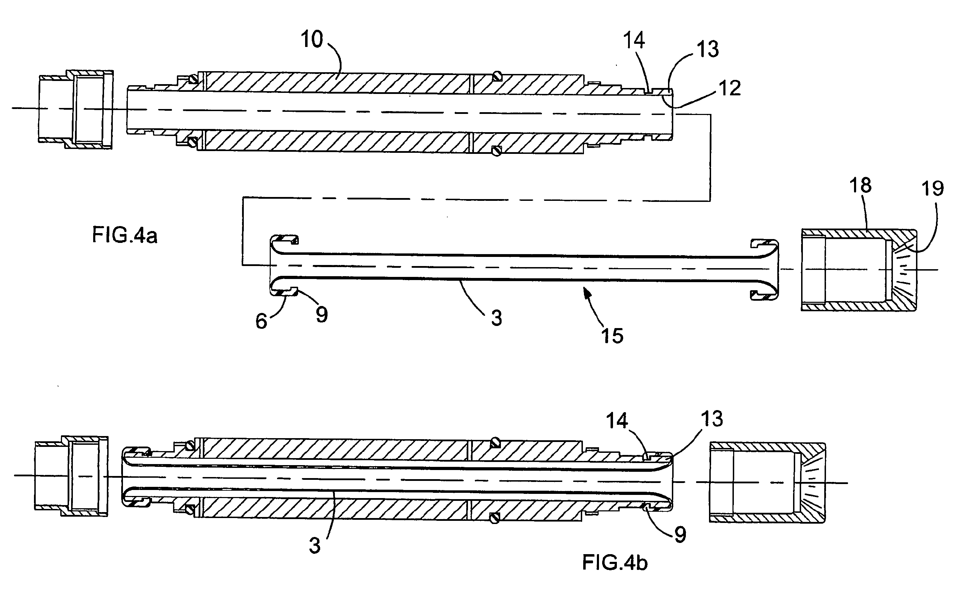

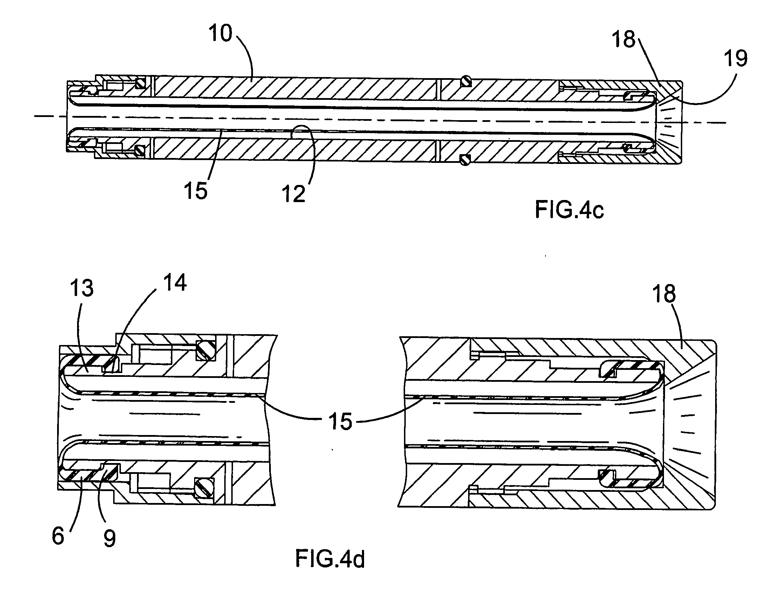

Figures 4a-4d illustrate the assembly of the sleeve of Figure 1b with a bobbin;
Figure 5a shows a cross-sectional front view of a head assembly in accordance with the invention for a pressure drop and/or ventilation measuring device;
Figure 5b shows a front view of the head assembly of Figure 5a;
Figure 6 shows a cross-sectional front view of a head assembly in accordance with the invention for a pressure drop measuring device.

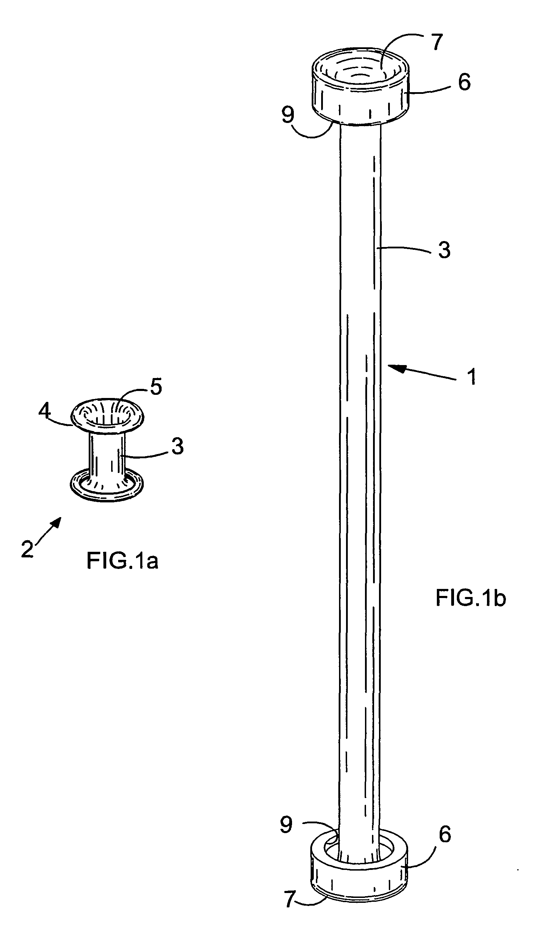

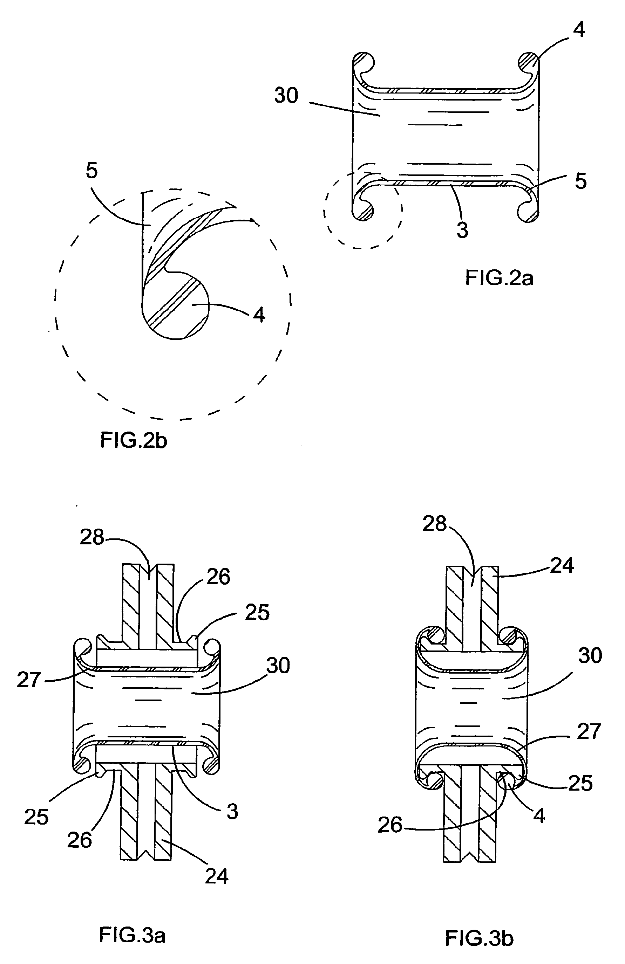

Two embodiments of sleeves in accordance with the present invention are shown in Figures 1a and 1b. Figure 1a shows a sleeve which comprises a hollow elongate body 3 approximately 10mm in length having a cylindrical configuration with an internal (unstretched) diameter of approximately 6mm, which is slightly smaller than the average diameter of a cigarette or filter rod therefor. The walls of the body have a thickness of approximately 0.3mm. As seen in Figure 2a, each end of the elongate body 3 is formed integrally with an outwardly-tapering curved frustoconical shoulder portion 5 which terminates in an annular lip portion 4 having an internal (unstretched) diameter of approximately 10.25mm; that is, a diameter larger than the internal diameter of the elongate body 3. Said annular lip portion 4 is substantially circular in axial cross-section and has an axial cross-sectional diameter of about 1.5mm, which is substantially greater than the thickness of the walls of the elongate body.

Figure 1b, meanwhile, shows a sleeve which comprises a hollow elongate body 3 of cylindrical configuration having a length of approximately 140mm and an internal (unstretched) diameter of approximately 6mm, which is slightly smaller than the average diameter of a cigarette or filter rod therefor. The walls of the body have a thickness of approximately 0.3mm. Each end of the elongate body 3 is formed integrally with an outwardly-tapering shoulder portion 7 and a cylindrical cup portion 6 having an internal (unstretched) diameter of approximately 12mm, which is larger than the internal diameter of the elongate body. As seen in Figure 1b, the provision of said shoulder portion 7 permits each cylindrical cup portion 6 of the sleeve to be readily turned inside out and folded outwardly along the length of the body 3. Because the cylindrical cup portion 6 has a larger diameter than the body 1, this does not impose a substantial strain on the material of the sleeve at the shoulder portion 7.

Each cylindrical cup portion 6 of the sleeve has a thickness of approximately 0.7mm, which is greater than the thickness of the elongate body 3 of the sleeve. This improves the resilience and gripping power of the cylindrical portion 6. Each cylindrical cup portion 6 of the sleeve further includes an annular lip portion 9 which protrudes from said cylindrical cup portion 6 around the opening of said cylindrical cup portion. Said annular lip portion 9 is substantially circular in axial cross-section and has an axial cross-sectional diameter of about 1.5mm.

The sleeves shown in Figures 1a and 1b are formed from cured silicone rubber, and are injection moulded into the shapes illustrated. The silicone rubber used for forming the sleeves is commercially available from Dow Corning STI or from The Harboro Rubber Co Ltd, St Mary's Road, Market Harborough, Leics LE16 7EE under product reference KP109. Physical characteristics of this material are given below :

| **Test** | **Result** |
|---|---|
| Hardness Shore A | 51 |
| Hardness IRHD | 56 |
| Specific Gravity | 1.13 |
| Tensile strength | 7.06 MPa |
| Elongate at break | 440% |
| Compression set 22hrs 175°C | +16.53% |
| Tear strength | 10.50N/mm |
| Low temp flex -55°C | Pass |
| Heat age 70hrs 225°C | |
| Hardness change | +3 |
| Tensile change | +2.26% |
| Elongation change | -4.54% |
| ASTM 1 swell 70hrs 150°C | |
| Hardness change | -6 |
| Tensile change | +6.09% |
| Elongation change | +2.27% |
| Volume change | +1.63% |
| ASTM 3 swell 70hrs 150°C | |
| Hardness change | -12 |
| Tensile change | +27.81% |

Where the silicone rubber is supplied in block form, the rubber is first milled into sheet form having a thickness of approximately 6-7mm, and cut into blanks having a weight of approximately 10g and a diameter of approximately 25mm.

Each blank is moulded into the desired shape in a conventional manner using a cavity injection tool. The silicone material contains a curing agent which cross-links during the moulding process, at a rate which is dependent on pressure, temperature and time. Typically, curing is permitted to occur over a period of about 5 minutes at a temperature of 175°C.

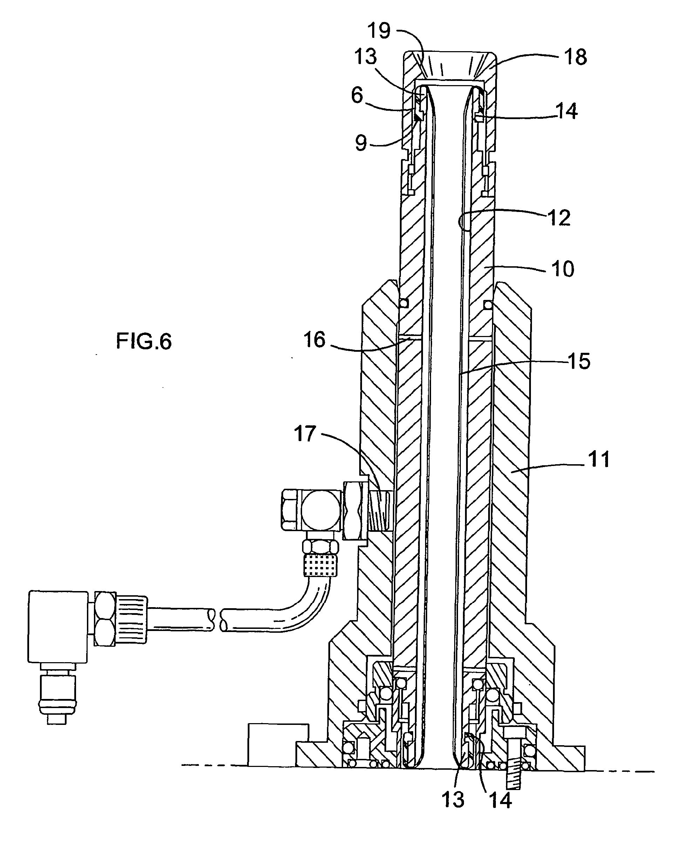

Each of the sleeves shown in Figures 1a and 1b is adapted to be fitted to a head assembly for a pressure drop or ventilation measuring device in accordance with the invention. A head assembly for a device suitable for measuring pressure drop only is shown in Figure 6. As seen in this Figure, the head assembly comprises a bobbin 10 which is securely held by a housing 11. Said bobbin 10 defines an elongate cylindrical bore 12 having a length of approximately 150mm, each end of which is defined by an annular flange 13. Each annular flange 13 includes a circular rebate 14 on the outer surface thereof, spaced from the end of said bore.

A sleeve 15 of the kind shown in Figure 1b is fitted to the interior of said bore 12. As seen in Figure 6, the cylindrical cup portion 6 at each end of the sleeve 15 is turned inside out over a respective annular flange 13 of the bobbin 10, such that the sleeve 15 is secured to the bobbin. The annular lip portion 9 of each cylindrical cup portion 6 engages with said circular rebate 14 on the respective annular flange 13. This improves the fixing of said sleeve 15 on the bobbin 10.

A cap 18 is provided for fitting to the bobbin 10 at one end of the bore 12 following the fitting of said sleeve 15. The cap 18 defines a bore 19 which is arranged to communicate with said bore 12, such that the bore 12 remains open at that end notwithstanding fitting of the cap 18.

The bobbin 10 includes a duct 16 opening in a side wall of said bore 12, which duct 16 communicates with a port 17 provided on said housing 11. Port 17 is connected to a vacuum pump (not shown). When a vacuum is applied to said port 17 and said duct 16 by said vacuum pump, air is evacuated from the space between the side walls of said bore 12 and the sleeve 15. This causes the sleeve 15 to be drawn outwardly against the side walls of the bore, thereby permitting a rolled smoking article or filter rod to be introduced into the sleeve through the open end of the bore 12. When the vacuum is released, the sleeve will relax away from the side walls of the bore, owing to the elastic nature of the material from which the sleeve is formed, and will grip the article or rod in an airtight fashion, but without unduly compressing the article or rod.

A stop (not shown) is positioned juxtaposed the end of the bore 12 remote from said open end. This serves to prevent a rolled smoking article or filter rod, having been introduced into said bore through said open end, from falling out of the bore through the other end thereof.

The end of the bore 12 remote from said open end constitutes a port which may be connected to a vacuum pump for evacuating air from the bore 12, or to a controlled source of pressurised air for propelling air under a known pressure into said bore 12. Once a rolled smoking article or filter rod has been introduced into said bore 12 and is gripped by said sleeve 15, the vacuum pump or pressurised air source may be operated to respectively withdraw air from the bore or propel pressurised air into the bore and through the article or rod within the bore. A measure of pressure drop along the length of the smoking article or filter rod may be obtained by measuring the pressure at the end of the bore 12 remote from said open end.

As the device of Figure 6 is suitable for measuring pressure drop but not ventilation, this device is typically only used in connection with filter rods, which comprise a cylindrical block of filter material shaped to be cut into lengths for inclusion in a rolled smoking article. Measurements of ventilation are not usually required for filter rods.

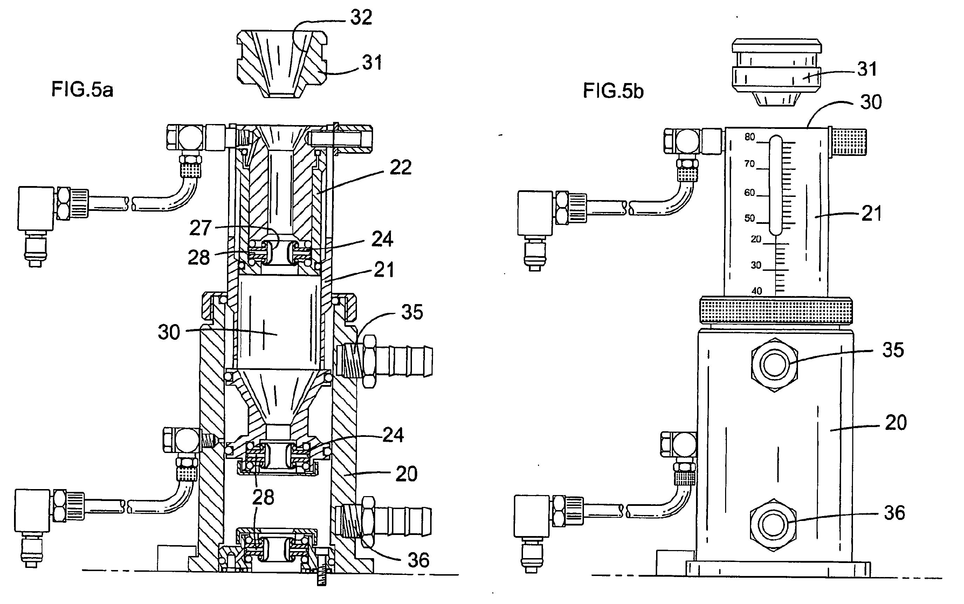

A head assembly for a device suitable for measuring either pressure drop or ventilation is shown in Figures 5a and 5b. This device is typically used in connection with rolled smoking articles, such as cigarettes, for which measurements of ventilation may be required.

As seen in Figures 5a and 5b, the head assembly of this device comprises a hollow tubular housing 20; a first hollow tubular member 21 which is mounted concentrically on said housing 20 such as to extend partly within said housing 20, and which is slidable within said housing 20; and a second hollow tubular member 22 which is mounted concentrically on said first tubular member 21 such as to extend partly within said member 21, and which is slidable within said member 21. Said second and first hollow tubular members and said housing together define a bore 30 which extends through said head assembly. The end of said second tubular member 22 which protrudes from said first tubular member 21 is adapted to be fitted with a cap 31, which cap 31 defines a bore 32, such that said end of the member 22 and the bore 30 remain open notwithstanding the fitting of said cap 31.

Each of said housing 20, said first tubular member 21 and said second tubular member 22 is provided at the end thereof remote from said open end with an internal annular bobbin 24, which bobbin 24 has an axial length of approximately 10mm. As seen in Figures 3a and 3b, each bobbin 24 has a substantially T-shaped axial cross-section, whereby each bobbin 24 defines a pair of axially-directed flanges 25. As best seen in Figures 3a and 3b, each flange 25 further includes an annular rebate 26 around the radially outward surface of the flange.

A sleeve 27 of the kind shown in Figure 1a is fitted to each bobbin 24. The elongate body 3 of the sleeve is inserted into the centre of the bobbin, and the lip portion 4 at each end of the sleeve is folded over a flange 25 of the protrusion 24 and engaged with the rebate 26 on the outer surface of the flange, as illustrated in Figure 3b. Thus, the sleeve 27 is held firmly in position on the bobbin 24.

Each bobbin 24 includes a duct 28 which is adapted to be connected to a vacuum pump. As seen in Figures 3a and 3b, said duct 28 opens between said flanges 25, such that when said duct 28 is connected to a vacuum pump and said pump is operated to withdraw air from the space between said flanges 25 and the associated sleeve 27, the elongate body 3. of the sleeve will be pulled outwardly against the duct 28. This will permit a rolled smoking article or filter rod to be inserted into the bobbin and sleeve assembly. Thereafter, the vacuum may be released, thereby permitting the elongate body of the sleeve to relax away from the duct 28 and to airtightly grip the rolled smoking article or filter rod.

The bobbins 24 of said housing 20 and said first and second tubular members 21, 22 are respectively positioned so as to grip onto a rolled smoking article or filter rod at three spaced points. Typically, a rolled smoking article such as a cigarette will be inserted filter-first into the head assembly, so that the sleeve 27 associated with said housing 20 will grip the cigarette around its filter, whilst the sleeve 27 associated with said second tubular member 22 will grip the cigarette at the other end thereof. Said first and second tubular members 21, 22 may be moved slidably relative to one another and to said housing 20 so as to adjust the relative positions of said sleeves.

Ports 35, 36 are provided in said housing 20 at spaced positions along the length thereof. Each port comprises a valve which may be respectively opened and closed for permitting or preventing the access of air into said bore 30 through the port. Where a measure of the ventilation of a cigarette accommodated within said bore 30 is required, therefore, one or both of said ports 35, 36 may be opened, and a vacuum may be applied to the end of the bore 30 remote from said open end. Air will accordingly be drawn through the cigarette from the open end of the bore. Depending upon the ventilation of the cigarette, air will also be drawn through each of the open ports 35, 36. The resultant airflow into said open ports will accordingly provide a measure of the ventilation of the cigarette. By moving said first tubular member 21 relative to the housing 20, so as to grip different areas of the cigarette, a measure of the effect on ventilation of "blocking" different areas of the lining paper of the cigarette may be obtained.

## Claims

1. A sleeve comprising a hollow elongate body (3) having two ends, which sleeve is suitable for elastically gripping a rolled smoking article or a filter rod for rolled smoking articles in an airtight or substantially airtight fashion;
**characterised in that** said sleeve is formed by moulding whereby each of said ends is moulded with an annular portion (4, 6) which can be folded circumferentially outwardly without imposing substantial strain on the material of the sleeve.

2. A sleeve as claimed in claim 1, wherein said annular portion of each end of the body comprises a cup or lip portion having an internal diameter larger than the internal diameter of the elongate body, and an annular shoulder portion which joins said cup or lip portion to the elongate body.

3. A sleeve as claimed in claim 2, wherein said annular shoulder portion has a substantially frustoconical or curved frustoconical configuration, which tapers in internal diameter from the internal diameter of the cup or lip portion to the internal diameter of the elongate body.

4. A sleeve as claimed in claim 2 or claim 3, wherein the axial length of said shoulder portion is no more than about 4mm.

5. A sleeve as claimed in any of claims 2-4, wherein the axial length of said shoulder portion is at least 1mm.

6. A sleeve as claimed in any of claims 2-5, wherein said annular portion of each end of the body comprises a cup portion, which cup portion comprises a circumferential lip remote from said shoulder portion, which circumferential lip protrudes radially outwardly from the outer surface of said cup portion.

7. A sleeve as claimed in any preceding claim, which has a length in the range about 25-300mm, or in the range about 3-50mm.

8. A sleeve as claimed in any preceding claim, which is formed by injection moulding from a material that is capable of being injection moulded.

9. A sleeve as claimed in any preceding claim, which sleeve comprises a silicone material, such as a cured silicone rubber.

10. A head assembly for a pressure drop and/or ventilation measuring device, which head assembly defines an elongate bore that is adapted for accommodating a rolled smoking article or a filter rod for rolled smoking articles, wherein one end of the bore is open and the other end of the bore is adapted to communicate with vacuum means whereby air may be drawn into said bore and through an article or rod accommodated within the bore and/or with a source of pressurised gas whereby pressurised gas may be propelled into said bore and through an article or rod accommodated within the bore, and wherein the head assembly comprises a sleeve in accordance with any preceding claim, and said bore comprises at least one pair of spaced circumferential flanges positioned within or around said bore, which flanges respectively engage the opposing annular portions of the sleeve, such that said sleeve is fitted to the interior of said bore and is positioned for elastically gripping a rolled smoking article or filter rod therein.

11. A head assembly as claimed in claim 10, wherein one or both of said circumferential flanges comprises an annular rebate provided on the outer surface thereof, which annular rebate is adapted to engage a circumferential lip provided on said sleeve.

12. A head assembly as claimed in claim 10 or 11, wherein said sleeve is arranged to extend along the full length of said bore, such as to grip said rolled smoking article or filter rod along the entire length thereof; and said circumferential flanges are respectively provided at each of the opposing ends of the bore.

13. A head assembly as claimed in claim 10 or 11, wherein said or each pair of flanges is positioned within said bore such that a rolled smoking article or filter rod accommodated within said bore is gripped along a part of the length thereof.

14. A head assembly as claimed in any of claims 10-13, wherein each pair of flanges is defined by an annular protrusion or bobbin provided on the walls of said bore, which annular protrusion or bobbin has a substantially T-shaped cross-section.

15. A method for measuring the pressure drop or ventilation of a rolled smoking article or a filter rod, comprising the steps of providing a pressure drop and/or ventilation measuring device having a head assembly in accordance with any of claims 10-14, placing said article or rod within the bore of said head assembly such that the article or rod is gripped by said or each sleeve, connecting said other end of the bore to vacuum means or to a source of pressurised gas and operating said vacuum means or said source of pressurised gas to respectively draw air or propel gas into said bore and through said article or rod, and measuring the resultant airflow or pressure difference along said article or rod.

## Patentansprüche

1. Hülse mit einem hohlen, lang gestreckten Körper (3) mit zwei Enden, wobei sich die Hülse zum elastischen Erfassen eines gerollten Rauchgegenstands oder eines Filterstücks für gerollte Rauchgegenstände in einer luftdichten oder im Wesentlichen luftdichten Weise eignet;
**dadurch gekennzeichnet, dass** die Hülse durch Formung ausgebildet wird, wodurch jedes der Enden mit einem ringförmigen Abschnitt (4, 6) geformt wird, der umlaufend nach außen umgebogen werden kann, ohne auf das Material der Hülse eine größere Spannung auszuüben.

2. Hülse nach Anspruch 1, wobei der ringförmige Abschnitt jedes Endes des Körpers einen becher- oder lippenförmigen Abschnitt mit einem größeren Innendurchmesser als dem Innendurchmesser des lang gestreckten Körpers und einen ringförmigen Schulterabschnitt umfasst, welcher den becherförmigen oder lippenförmigen Abschnitt mit dem lang gestreckten Körper verbindet.

3. Hülse nach Anspruch 2, wobei der ringförmige Schulterabschnitt eine im Wesentlichen kegelstumpfförmige oder gebogene, kegelstumpfförmige Gestalt aufweist, deren Innendurchmesser sich von dem Innendurchmesser des becherförmigen oder lippenförmigen Abschnitts auf den Innendurchmesser des lang gestreckten Körpers verjüngt.

4. Hülse nach Anspruch 2 oder Anspruch 3, wobei die Axiallänge des Schulterabschnitts nicht mehr als etwa 4mm beträgt.

5. Hülse nach einem der Ansprüche 2 - 4, wobei die Axiallänge des Schulterabschnitts wenigstens 1mm beträgt.

6. Hülse nach einem der Ansprüche 2 - 5, wobei der ringförmige Abschnitt jedes Endes des Körpers einen becherförmigen Abschnitt umfasst, wobei der becherförmige Abschnitt eine umlaufende, von dem Schulterabschnitt entfernt befindliche Lippe umfasst, wobei die umlaufende Lippe von der Außenfläche des becherförmige Abschnitts radial nach außen vorsteht.

7. Hülse nach einem vorhergehenden Anspruch, die eine Länge im Bereich von etwa 25 - 300mm oder im Bereich von etwa 3 - 50mm aufweist.

8. Hülse nach einem vorhergehenden Anspruch, die durch Spritzgießen aus einem Material ausgebildet ist, das spritzgegossen werden kann.

9. Hülse nach einem vorhergehenden Anspruch, wobei die Hülse ein Siliconmaterial wie gehärteten Siliconkautschuk umfasst.

10. Kopfanordnung für eine Druckabfall- und/oder Belüftungsmessvorrichtung, wobei die Kopfanordnung eine lang gestreckte Bohrung bildet, in der ein gerollter Rauchgegenstand oder ein Filterstück für gerollte Rauchgegenstände untergebracht werden kann, wobei das eine Ende der Bohrung offen ist und das andere Ende der Bohrung mit einem Vakuummittel verbunden werden kann, wodurch Luft in die Bohrung und durch einen Gegenstand oder ein Filterstück hindurch gesaugt wird, die in der Bohrung untergebracht sind, und/oder mit einer Druckgasquelle, wodurch das Druckgas in die Bohrung und durch einen Gegenstand oder ein Filterstück hindurch getrieben werden kann, die in der Bohrung untergebracht sind, und wobei die Kopfanordnung eine Hülse gemäß einem vorhergehenden Anspruch umfasst, und die Bohrung wenigstens zwei beabstandete, umlaufende Flansche umfasst, die in der Bohrung oder um diese herum positioniert sind, wobei die Flansche jeweils derart in die einander gegenüberliegenden Abschnitte der Hülse eingreifen, dass die Hülse ins Innere der Bohrung eingepasst und positioniert wird, um elastisch einen gerollten Rauchgegenstand oder ein Filterstück darin zu erfassen.

11. Kopfanordnung nach Anspruch 10, wobei der eine oder beide von den umlaufenden Flanschen einen ringförmigen Falz umfasst, der an der Außenfläche derselben vorgesehen ist, wobei der ringförmige Falz in eine umlaufende, an der Hülse vorgesehene Lippe eingreifen kann.

12. Kopfanordnung nach Anspruch 10 oder 11, wobei die Hülse derart in Erstreckung entlang der vollen Länge der Bohrung angeordnet ist, dass sie den gerollten Rauchgegenstand oder das Filterstück entlang der gesamten Länge desselben erfasst; und die umlaufenden Flansche jeweils an den einander gegenüberliegenden Enden der Bohrung vorgesehen sind.

13. Kopfanordnung nach Anspruch 10 oder 11, wobei die beiden Flansche oder jedes Paar derselben derart in der Bohrung positioniert sind, dass ein gerollter Rauchgegenstand oder ein Filterstück, die in der Bohrung untergebracht sind, entlang eines Teils der Länge desselben erfasst werden.

14. Kopfanordnung nach einem der Ansprüche 10-13, wobei jedes Flanschpaar von einem ringförmigen Vorsprung oder Hülsenröhrchen gebildet ist, die an der Wand der Bohrung vorgesehen sind, wobei der ringförmige Vorsprung oder das Hülsenröhrchen einen im Wesentlichen T-förmigen Querschnitt aufweist.

15. Messverfahren für den Druckabfall oder die Belüftung eines gerollten Rauchgegenstands oder eines Filterstücks, mit den Schritten des Bereitstellens einer Druckabfall- und/oder Belüftungsmessvorrichtung mit einer Kopfanordnung gemäß einem der Ansprüche 10 - 14, des Einbringens des Gegenstands oder Filterstücks in die Bohrung der Kopfanordnung derart, dass der Gegenstand oder das Filterstück von der oder von jeder Hülse erfasst wird, des Verbindens des anderen Endes der Bohrung mit einem Vakuummittel oder einer Druckgasquelle, und des Betätigens des Vakuummittels oder der Druckgasquelle, um jeweils Luft oder Treibgas in die Bohrung oder durch den Gegenstand oder das Filterstück hindurch zu saugen, und des Messens des entstandenen Luftstroms oder der Druckdifferenz entlang dem Gegenstand oder Filterstück.

## Revendications

1. Manchon comprenant un corps creux allongé (3) ayant deux extrémités, manchon qui est approprié pour saisir, de manière élastique, un article pour fumeur cylindrique ou un bout filtre pour articles pour fumeur cylindriques, de manière étanche à l'air ou essentiellement étanche à l'air ;
**caractérisé en ce que** ledit manchon est formé par moulage de sorte que chacune desdites extrémités soit moulée avec une partie annulaire (4, 6) qui peut être repliée circonférentiellement vers l'extérieur sans exercer de contrainte importante sur le matériau du manchon.

2. Manchon selon la revendication 1, dans lequel ladite partie annulaire de chaque extrémité du corps comprend une partie en forme de coupelle ou de lèvre qui a un diamètre intérieur supérieur au diamètre intérieur du corps allongé, et une partie d'épaulement annulaire qui relie ladite partie en forme de coupelle ou de lèvre au corps allongé.

3. Manchon selon la revendication 2, dans lequel ladite partie d'épaulement annulaire a une configuration essentiellement tronconique ou tronconique incurvée, dont le diamètre intérieur diminue en allant du diamètre intérieur de la partie en forme de coupelle ou de lèvre au diamètre intérieur du corps allongé.

4. Manchon selon la revendication 2 ou 3, dans lequel la longueur axiale de ladite partie d'épaulement est de pas plus environ 4 mm.

5. Manchon selon l'une quelconque des revendications 2 à 4, dans lequel la longueur axiale de ladite partie d'épaulement est d'au moins 1 mm.

6. Manchon selon l'une quelconque des revendications 2 à 5, dans lequel ladite partie annulaire de chaque extrémité du corps comprend une partie en forme de coupelle, partie en forme de coupelle qui comprend une lèvre circonférentielle éloignée de ladite partie d'épaulement, lèvre circonférentielle qui dépasse radialement vers l'extérieur par rapport à la surface externe de ladite partie en forme de coupelle.

7. Manchon selon l'une quelconque des revendications précédentes, qui a une longueur dans la gamme d'environ 25 à 300 mm ou dans la gamme d'environ 3 à 50 mm.

8. Manchon selon l'une quelconque des revendications précédentes, qui est formé par moulage par injection à partir d'un matériau qui peut être moulé par injection.

9. Manchon selon l'une quelconque des revendications précédentes, manchon qui comprend un matériau silicone tel qu'un caoutchouc silicone durci.

10. Bloc de tête pour dispositif de mesure de chute de pression et/ou de ventilation, bloc de tête qui définit un fût allongé qui est conçu pour loger un article pour fumeur cylindrique ou un bout filtre pour articles pour fumeur cylindriques, dans lequel une extrémité du fût est ouverte et l'autre extrémité du fût est conçue pour communiquer avec des moyens de vide de sorte que de l'air puisse être aspiré dans ledit fût et à travers un article ou un bout filtre logé dans le fût et/ou avec une source de gaz sous pression de sorte que du gaz sous pression puisse être propulsé dans ledit fût et à travers un article ou un bout filtre logé dans le fût, et dans lequel le bloc de tête comprend un manchon selon l'une quelconque des revendications précédentes, et ledit fût comprend au moins une paire de collerettes circonférentielles espacées, positionnées à l'intérieur ou autour dudit fût, collerettes qui viennent respectivement en prise avec les parties annulaires opposées du manchon de sorte que ledit manchon s'ajuste à l'intérieur dudit fût et soit positionné pour saisir de manière élastique, dans celui-ci, un article pour fumeur cylindrique ou un bout filtre.

11. Bloc de tête selon la revendication 10, dans lequel l'une ou les deux desdites collerettes circonférentielles comprennent une feuillure annulaire sur leur surface externe, feuillure annulaire qui est conçue pour venir en prise avec une lèvre circonférentielle formée sur ledit manchon.

12. Bloc de tête selon la revendication 10 ou 11, dans lequel ledit manchon est conçu pour s'étendre sur toute la longueur dudit fût, tel que pour saisir ledit article pour fumeur cylindrique ou bout filtre sur toute la longueur de celui-ci; et lesdites collerettes circonférentielles sont respectivement formées au niveau de chacune des extrémités opposées du fût.

13. Bloc de tête selon la revendication 10 ou 11, dans lequel lesdites ou chaque paire de collerettes sont positionnées à l'intérieur dudit fût de sorte qu'un article pour fumeur cylindrique ou qu'un bout filtre logé à l'intérieur dudit fût soit saisi le long d'une partie de sa longueur.

14. Bloc de tête selon l'une quelconque des revendications 10 à 13, dans lequel chaque paire de collerettes est définie par une protubérance annulaire ou bobine formée sur les parois dudit fût, protubérance annulaire ou bobine qui a une section droite essentiellement en forme de T.

15. Procédé de mesure de la chute de pression ou de la ventilation d'un article pour fumeur cylindrique ou d'un bout filtre, comprenant les étapes consistant à fournir un dispositif de mesure de chute de pression et/ou de ventilation comprenant un bloc de tête selon l'une quelconque des revendications 10 à 14, placer ledit article ou bout filtre à l'intérieur du fût dudit bloc de tête de sorte que l'article ou le bout filtre soit saisi par ledit ou par chaque manchon, connecter ladite autre extrémité du fût à des moyens de vide ou à une source de gaz sous pression et actionner lesdits moyens de vide ou ladite source de gaz sous pression respectivement pour aspirer de l'air ou propulser du gaz dans ledit fût et à travers ledit article ou bout filtre, et mesurer le débit d'air ou le différentiel de pression résultant le long dudit article ou bout filtre.
